# EUROPÄISCHE PATENTSCHRIFT

(11) **EP 1 052 382 B1**
(45) Veröffentlichungstag und Bekanntmachung des Hinweises auf die Patenterteilung: **09.07.2003**
(21) Anmeldenummer: 00108022.5
(22) Anmeldetag: 20.04.2000
(51) Int. Cl.: F01N 3/08, F02D 41/02

(54) **Abgasreinigungsvorrichtung mit NOx-Speicherkatalysator und Vorkatalysator**
Exhaust gas purification arrangement comprising a NOx absorber and a pre-catalyst
Purification de gaz d'échappement comprenant un catalyseur de stockage de NOx et un pré-catalyseur

(30) Priorität: 12.05.1999 DE 19921976
(43) Veröffentlichungstag der Anmeldung: 15.11.2000
(73) Patentinhaber: Volkswagen Aktiengesellschaft, 38436 Wolfsburg (DE)
(72) Erfinder: Pott, Ekkehard, Dr., 38518 Gifhorn (DE); Gottschling, Martina, Dipl.-Ing., 38114 Braunschweig (DE)
(74) Vertreter: Schneider, Henry, Dipl.-Ing.

(56) Entgegenhaltungen:
- EP-A- 0 908 613
- DE-A- 19 636 041
- US-A- 5 649 421

## Beschreibung

Die Erfindung betrifft eine Anordnung zur Reinigung eines Abgases einer Verbrennungskraftmaschine mit den im Oberbegriff des Anspruchs 1 genannten Merkmalen.

Anordnungen der gattungsgemäßen Art sind bekannt und werden zur Reduzierung gasförmiger Schadstoffe, wie CO, HC oder NO_{X} als Bestandteile des Abgases, verwendet. Solche Verbrennungskraftmaschinen können in verschiedenen Arbeitsmodi betrieben werden, die sich durch einen Lambdawert charakterisieren lassen. So verweist ein Lambdawert > 1 auf einen Arbeitsmodus, bei dem eine Konzentration von Sauerstoff eine Konzentration eines Kraftstoffes übersteigt (magere Atmosphäre). Bei λ = 1 liegen stöchiometrische Verhältnisse vor, während bei λ < 1 - in sogenannter fetter Atmosphäre - die Konzentration des Kraftstoffes überwiegt. Im Zuge fortschreitender Optimierungsbemühungen eines Verbrennungsvorganges hinsichtlich eines Kraftstoffverbrauchs hat es sich als vorteilhaft erwiesen, insbesondere bei Verbrennungskraftmaschinen mit Direkteinspritzung, den mageren Arbeitsmodus (λ > 1) der Verbrennungskraftmaschine möglichst lange aufrechtzuerhalten.

Während des Verbrennungsvorganges eines Luft-Kraftstoff-Gemisches entstehen entsprechend der Betriebsparameter und des Arbeitsmodus der Verbrennungskraftmaschine reduzierende Gaskomponenten, wie CO und HC, oder oxidierende Gaskomponenten, wie NO_{X}. Beide Gaskomponenten liegen in einem thermodynamischen Gleichgewicht untereinander und mit Sauerstoff vor, dessen Einstellung durch geeignete Katalysatoren unterstützt werden kann. Eine Oxidation der reduzierenden Gaskomponenten ist weitestgehend unter allen Arbeitsmodi möglich. Es ist jedoch nicht möglich, in dem mageren Arbeitsmodus eine Reduktion des NO_{X} an dem Katalysator zu gewährleisten. Daher werden NO_{X}-Absorber eingesetzt, die unter solchen Bedingungen NO_{X} zwischenspeichern und bei λ ≤ 1 eine katalytische Umsetzung (Reduktion) des NO_{X} erlauben.

Es ist ferner bekannt, ein Katalysatorsystem aus einem motornahen Vorkatalysator mit wenigstens einem stromab angeordneten NO_{X}-Speicherkatalysator zu bilden. Der Vorkatalysator ist üblicherweise ein 3-Wege-Katalysator. Das heißt, er kann einerseits eine Oxidation der reduzierenden Gaskomponenten beschleunigen und andererseits auch die Reduktion des NO_{X} unterstützen. In dem bevorzugten mageren Arbeitsmodus findet allerdings nur die Oxidation der reduzierenden Gaskomponenten statt, während NO_{X} in dem nachfolgenden NO_{X}-Speicherkatalysator eingelagert wird. Eine Absorption des NO_{X} in dem NO_{X}-Speicherkatalysator findet solange statt, bis seine Kapazität überschritten wird und/oder eine Desorptionstemperatur erreicht wird.

in gängigen Kraftstoffen ist Schwefel in wechselnden Anteilen vorhanden. Während des Verbrennungsvorganges des Luft-Kraftstoff-Gemisches entsteht dabei SO₂, welches in dem NO_{X}-Speicherkatalysator unter Bildung von Sulfat absorbiert wird. Die Sulfatbildung kann allerdings zu Inhomogenitäten innerhalb des NO_{X}-Speicherkatalysators aufgrund einer partiellen Kombildung führen. Solche Inhomogenitäten bilden einen Angriffspunkt für korrosive Prozesse, wie beispielsweise eine Rißbildung oder auch thermische Alterungserscheinungen, und führen damit zu einer Schädigung des NO_{X}-Speicherkatalysators. Daneben werden die zur NO_{X}-Einlagerung verfügbaren Speicherplätze mit den chemisch stabileren Sulfaten blockiert und somit eine Effizienz der NO_{X}-Einlagerung im mageren (Abgas) Arbeitsmodus gemindert.

Es ist daher bekannt, den NO_{X}-Speicherkatalysator in regelmäßigen Zyklen zu entschwefeln. Notwendige Bedingung für die Entschwefelung ist zum einen eine Einstellung einer Mindestentschwefelungstemperatur, und zum anderen muß sich die Verbrennungskraftmaschine in dem fetten Arbeitsmodus befinden. Ist Lambda sehr gering, so wird überwiegend H₂S gebildet, während bei einem Lambdawert um 1 oder knapp unter 1 überwiegend SO₂ entsteht. Nachteilig bei den bisherigen Katalysatorsystemen ist jedoch, dass weiterhin eine sehr hohe Konvertierungsrate für die Oxidation der reduzierenden Gaskomponenten an dem Vorkatalysator besteht. Daher ist trotz fetter Atmosphäre die Konzentration der reduzierenden Gaskomponenten hinter dem Vorkatalysator relativ gering, und somit verlängert sich eine Dauer der Entschwefelung. Dies führt zu einem erhöhten Kraftstoffverbrauch.

Dokument EP 0 908 613 A2 beschreibt eine Anordnung zur Reinigung von Abgasen einer Brennkraftmaschine gemäß dem Oberbegriff von Anspruch 1.

Aus der DE 196 36 041 A1 ist es bekannt, bei Dieselbrennkraftmaschinen im Abgasreinigungssystem einen Vorkatalysator vor einen NO_{X}-Speicherkatalysator einzusetzen, wobei der Vorkatalysator ein Gesamtvolumen von 10 bis 25 % des Hubraumes der Dieselbrennkraftmaschine haben soll. Bei dem Vorkatalysator handelt es sich um einen reinen Oxidationskatalysator, dessen Aufgabe es ist, das NO₂/NO-Verhältnis im Abgas der Brennkraftmaschine zu vergrößern. Dieser Vorkatalysator hat keine besondere Funktion für eine Entschwefelung des NO_{X}-Speicherkatalysators.

Der vorliegenden Erfindung liegt die Aufgabe zugrunde, auf möglichst einfache und kostengünstige Weise eine Reduzierung der Konvertierungsrate der reduzierenden Gaskomponenten während der Entschwefelung zu ermöglichen. Weiterhin soll die Entschwefelung überwiegend zur Bildung von SO₂ anstelle von H₂S führen.

Erfindungsgemäß wird diese Aufgabe gelöst durch die Anordnung zur Reinigung des Abgases der Verbrennungskraftmaschine mit den im Anspruch 1 genannten Merkmalen. Dadurch, daß das Volumen des Vorkatalysators 15 % bis 35 % eines Volumens eines Hubraumes der Verbrennungskraftmaschine entspricht, kann die Konvertierungsrate des Vorkatalysators während der Entschwefelung deutlich gesenkt werden, so daß in einem solchen Arbeitsmodus der Verbrennungskraftmaschine eine erhöhte Konzentration reduzierender Gaskomponenten vorhanden ist. Somit ist eine Entschwefelungsgeschwindigkeit deutlich erhöht.

Weiterhin ist bevorzugt, eine Einstellung der Betriebsparameter der Verbrennungskraftmaschine während der Entschwefelung derart auszugestalten, daß sich gleichzeitig eine Raumgeschwindigkeit des Abgases beim Durchströmen des Vorkatalysators deutlich erhöht. Auf diese Weise kann die Konvertierungsrate am Vorkatalysator für die reduzierende Gaskomponente zusätzlich verringert werden. Insgesamt ist das Volumen des Vorkatalysators derart gewählt, daß in allen anderen Arbeitsmodi der Verbrennungskraftmaschine, außer während der Entschwefelung, die reduzierenden Gaskomponenten zumindest bei niedrigen Raumgeschwindigkeiten nahezu vollständig umgesetzt werden. Durch den Einbruch der Konvertierungsrate während der Entschwefelung kann ein Arbeitsmodus der Verbrennungskraftmaschine gewählt werden mit Lambda knapp unter 1, bevorzugt λ = 0,97...0,995, da hier bereits die Konzentration der reduzierenden Gaskomponenten zur zügigen Entschwefelung hoch genug liegt. In einer solchen Atmosphäre wird das Sulfat überwiegend zu SO₂ umgesetzt und eine Bildung des geruchsbelästigenden H₂S verhindert. Zudem sinkt ein Wirkungsgrad der Verbrennungskraftmaschine mit fallendem Lambdawert, das heißt, die Verbrennungskraftmaschine liefert unter diesen Regenerationsparametem eine niedrigere Leistung beziehungsweise arbeitet mit einem höheren Kraftstoffverbrauch.

Die Erfindung kommt besonders vorteilhaft bei Brennkraftmaschinen mit Direkteinspritzung des Kraftstoffs in die Zylinder, insbesondere Benzindirekteinspritzer, zum Einsatz.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnungen näher erläutert. Es zeigen:
- Figur 1: ein Katalysatorsystem mit einem motornahen Vorkatalysator und wenigstens einem stromab angeordneten NOₓ-Speicherkatalysator in einem Abgaskanal einer Verbrennungskraftmaschine und
- Figur 2: eine Konzentration beziehungsweise ein Volumenanteil von HC und CO vor und hinter dem Vorkatalysator während einer Entschwefelung.

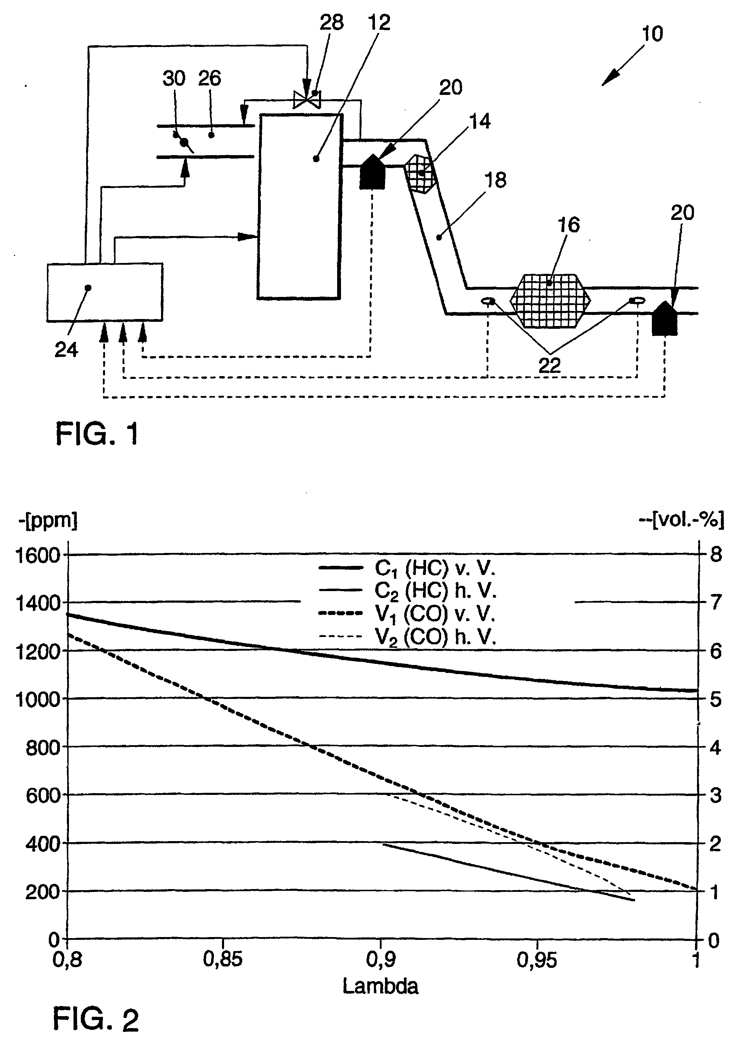

Die Figur 1 zeigt schematisch ein Katalysatorsystem 10 zur Reinigung eines Abgases einer Verbrennungskraftmaschine 12. Das Katalysatorsystem 10 umfaßt dabei einen Vorkatalysator 14 und einen NOₓ-Speicherkatalysator 16, die in einem Abgaskanal 18 der Verbrennungskraftmaschine 12 angeordnet sind. Zur Erfassung einer Konzentration von Schadstoffen, wie CO, HC oder NOₓ, befinden sich in ausgewählten Bereichen des Abgaskanals 18 Gassensoren 20. Ferner kann eine Temperatur des Abgases mit Hilfe von zusätzlich in dem Abgaskanal 18 angeordneten Temperatursensoren 22 gemessen werden.

Ein Arbeitsmodus der Verbrennungskraftmaschine 12 kann mittels eines Motorsteuergerätes 24 geregelt werden. So kann beispielsweise für den Fall, daß ein fetter Arbeitsmodus, das heißt λ < 1, der Verbrennungskraftmaschine erforderlich ist, eine Konzentration von Sauerstoff in einem Saugrohr 26 verringert werden. Dazu wird einerseits über ein Abgasrückführventil 28 sauerstoffarmes Abgas in das Saugrohr 26 geleitet und andererseits wird über eine Drosselklappe 30 ein Volumenstrom an angesaugter Luft verringert. Nach einem Verbrennungsvorgang in der Verbrennungskraftmaschine 12 liegen in einem solchen Arbeitsmodus erhöhte Konzentrationen reduzierender Gaskomponenten in dem Abgas vor.

Der Vorkatalysator 14 ist üblicherweise als ein 3-Wege-Katalysator ausgelegt. Neben einer Reduktion von NO_{X} in fetter oder stöchiometrischer Atmosphäre ermöglicht er eine Oxidation der reduzierenden Gaskomponenten in allen Arbeitsmodi. Ein Volumen des Vorkatalysators entspricht dabei 15 % bis 35 %, insbesondere 20 % bis 30 %, eines Hubraumes der Verbrennungskraftmaschine.

Eine Entschwefelung soll eine Regeneration des NO_{X}-Speicherkatalysators 16 bewirken. Während des Verbrennungsvorganges entsteht durch wechselnde Schwefelanteite im Kraftstoffgemisch SO₂, welches sich unter λ > 1 als Sulfat in Konkurrenz zum NO_{X} in den NO_{X}-Speicherkatalysator 16 einlagert. Damit ist eine NO_{X}-Speicherkapazität und eine katalytisch aktive Oberfläche des NO_{X}-Speicherkatalysators 16 verringert. Zudem können infolge einer Sulfatkombildung Verspannungen innerhalb des NO_{X}-Speicherkatalysators 16 auftreten, die zu einer beschleunigten Alterung infolge von Rißbildungen führen können. Ein Verschwefelungsgrad des NO_{X}-Speicherkatalysators 16 kann durch eine Messung einer Effizienz für eine NO_{X}-Konvertierung überwacht werden. Dazu wird mittels des Gassensorelementes 20 die NO_{X}-Konzentration hinter dem NO_{X}-Speicherkatalysator 16 gemessen und die NO_{X}-Konzentration vor dem NO_{X}-Speicherkatalysators 16 anhand von Erfahrungswerten geschätzt. Ein solches Verfahren ist bekannt und soll hier nicht näher erläutert werden.

Die Entschwefelung des NO_{X}-Speicherkatalysators 16 kann nur bei λ ≤ 1 und einem Überschreiten einer Mindestentschwefelungstemperatur stattfinden (Regenerationsparameter). Eine temporäre Beeinflussung der Betriebsparameter der Verbrennungskraftmaschine 12, beispielsweise durch ein Spätzündung, eine zylinderselektive Vertrimmung der Verbrennungskraftmaschine 12 oder eine Nacheinspritzung, führt neben einem Wechsel des Arbeitsmodus in λ < 1 zu einer Erhöhung der Abgastemperatur und Raumgeschwindigkeit. Dabei liegt der Arbeitsmodus der Verbrennungskraftmaschine 12 bevorzugt nur knapp unter λ = 1, so daß die Entschwefelung zur Bildung von SO₂ anstelle des wesentlich geruchsintensiveren H₂S führt.

Ein Verlauf zweier reduzierender Gaskomponenten, nämlich HC und CO, vor und hinter dem Vorkatalysator 14 ist in der Figur 2 skizziert. Aus Gründen der Übersichtlichkeit ist auf die Darstellung von H₂, das in einem CO-H₂-Verhältnis von zirka 3:1 gebildet wird, verzichtet worden. Die Konzentration von HC vor und hinter dem Vorkatalysator 14 ist relativ gering, und der Einfluß dieser Komponente auf die Entschwefelung, insbesondere auf eine Entschwefelungsgeschwindigkeit, ist zu vernachlässigen. Dagegen liegt ein Volumenanteil von Kohlenmonoxid bei λ = 0,9 bei zirka 3 % und bei λ = 0,95 immerhin noch bei zirka 2 %. Diese Volumenanteile übersteigen bei weitem Werte, wie sie bei einem Normalbetrieb des Katalysatorsystems 10 erfaßbar sind, und es kommt somit zu einer deutlichen Beschleunigung der Entschwefelung. Dieser Einbruch der Konvertierungsrate der reduzierenden Gaskomponenten während der Entschwefelung basiert auf der erfindungsgemäßen Auslegung des Volumens des Vorkatalysators 14 mit Hinsicht auf das Volumen des Hubraums der Verbrennungskraftmaschine 12.

## Patentansprüche

1. Anordnung zur Reinigung eines Abgases einer Benzindirekteinspritzer-Brennkraftmaschine (12), wobei die Anordnung zur Reinigung des Abgases ein in einem Abgaskanal (18) angeordnetes Katalysatorsystem aufweist, wobei das Katalysatorsystem einen motomahen Drei-Wege-Katalysator (14) und wenigstens einen stromab angeordneten NO_{X}-Speicherkatalysator (16) umfasst, **dadurch gekennzeichnet, dass** ein Volumen des Drei-Wege-Katalysators (14) 15 % bis 35 % eines Volumens eines Hubraumes der Brennkraftmaschine (12) entspricht.

2. Anordnung nach Anspruch 1, **dadurch gekennzeichnet, dass** das Volumen des Drei-Wege-Katalysators (14) 20 % bis 30 % des Volumens des Hubraumes der Brennkraftmaschine (12) entspricht.

## Claims

1. Arrangement for cleaning an exhaust gas from a direct-injection petrol combustion engine (12), wherein the arrangement for cleaning the exhaust gas provides a catalyst system arranged in an exhaust-gas duct (18), wherein the catalyst system comprises a three-way catalyst (14) located close to the engine and at least one NOₓ storage catalyst (16) located downstream of the latter, **characterised in that** a volume of the three-way catalyst (14) corresponds to 15% to 35% of a volume of a piston capacity of the combustion engine (12).

2. Arrangement according to claim 1, **characterised in that** the volume of the three-way catalyst (14) corresponds to 20% to 30% of the volume of the piston capacity of the combustion engine (12).

## Revendications

1. Dispositif de purification d'un gaz d'échappement d'un moteur à combustion interne à injection directe (12), dans lequel le dispositif de purification du gaz d'échappement présente un système de catalyseur disposé dans un canal d'échappement (18), où le système de catalyseur comprend un catalyseur à trois voies (14) proche du moteur et au moins un catalyseur de stockage des Nox (16) disposé en aval, **caractérisé en ce qu'**un volume du catalyseur à trois voies (14) correspond à 15% à 35% d'un volume d'une cylindrée du moteur à combustion interne (12).

2. Dispositif selon la revendication 1, **caractérisé en ce que** le volume du catalyseur à trois voies (14) correspond à 20 % à 30 % du volume de la cylindrée du moteur à combustion interne (12).
